# EUROPEAN PATENT SPECIFICATION

(11) **EP 2 298 092 B1**
(45) Date of publication and mention of the grant of the patent: **04.01.2017**
(21) Application number: 09170717.4
(22) Date of filing: 18.09.2009
(51) Int. Cl.: A23N 12/02, A23N 12/04, A23B 7/06

(54) **Machine and method for processing fruit or vegetables**
Maschine und Verfahren zur Verarbeitung von Obst oder Gemüse
Machine et procédé de traitement des fruits ou légumes

(43) Date of publication of application: 23.03.2011
(73) Proprietor: Rosenqvists Food Technologies AB, 291 97 Gärds Köpinge (SE)
(72) Inventor: Kalling, Magnus, 290 34 Fjälginge (SE); Haraldsson, Roland, 295 32 Bromölla (SE)
(74) Representative: Andersson, Björn E.

(56) References cited:
- EP-A1- 0 508 238
- FR-A1- 2 674 100
- US-A- 4 702 161
- US-A- 5 752 431
- Gaiser M: "Veränderung der Inhaltsstoffkonzentration beim Blanchieren von Gemüsen, insbesondere Spinat" 2000, Tectum Verlag , Marburg , XP002580539 ISBN: 3828809251pages 3-5, * page 4, paragraph 1; figure 2.1 *

## Description

The present invention relates to an apparatus for processing of fruit and vegetables using water in general, and a machine for blanching of potato slices in particular. The present invention also relates to a method for such processing.

### Background

It is known to blanch potato slices before deep-frying, with the purpose of removing sugar, such as glucose, fructose that may cause discoloration during a deep-frying process. In such a process it is preferred to remove as much as possible of the sugar causing the discoloration without affecting the product in terms of texture, mass etc. It has also been discovered that acrylamide, which is considered to be a carcinogenic substance is generated in a reaction between asparagine and sugar (both being naturally present in potatoes) when heated. Thus, by removing sugar, the resulting amount of acrylamide in the final product is reduced. However, when removing sugar by means of blanching the texture of the product may be affected, which in turn affects the taste and the texture of the final product in a negative way.

It is also known to convey e.g. potato slices through an apparatus comprising a water bath in order to blanch the slices. In such an apparatus a trough contains the water and the chips may be conveyed through the water on a conveyor using dual conveyor mechanism comprising a lower endless conveyor belt and an upper endless conveyor belt. The upper conveyor belt comprises flaps extending at right angles from the belt and transverse relative to the to the machine direction. The flaps are distributed along the length of the upper conveyor belt. The flaps extend into the water and define compartments together with the lateral walls of the trough and the lower conveyor belt. The potato slices may then be conveyed through the water bath, first on the lower conveyor, thereafter in the above defined compartments, before leaving the water bath on the lower conveyor belt.

During blanching, turbulence may be induced by means of water jets in the cross direction of the conveying direction in order to keep the potato slices from adhering to each other, which is also known. As the blanching process proceeds the sugar content of the water in the trough will increase, whereby further fresh water may be added as required. In the known device the fresh water is added from above as a function of the water level in the trough.

US5762431 describes a blancher having multiple cooling zones formed by a tank having multiple compartments for receiving a heating liquid in one compartment and a coolant in at least two other compartments.US4702161 describes an apparatus for blanching and cooling vegetable products comprises a perforated product conveyor belt having an upper belt run which extends and travels through a treatment tunnel defined in a casing of the apparatus. A layer of vegetable product is transported on the upper belt run through successive treatment zones defined in the treatment tunnel. In a blanching zone, the product layer is sprayed with a blanching liquid which is recirculated and maintained at a desired blanching temperature. The blanching zone is followed by a cooling zone in which the product layer is cooled by spraying a cooling liquid thereon.

EP0508238 describes a process and a device for preserving fruits or vegetables by blanching. An immersion belt blancher is used having direct steam heating of the water bath. Blanching water is removed by suction at a plurality of points over the length of the blancher and is returned to the water bath against the direction of transport of the product. The water bath is divided beneath the belt conveyor by partition walls into separate sections, which are arranged in the conveying direction.

Prior art apparatuses, as schematically described above provide a functional solution, yet the present applicant has found a number of points where there is room for inventive improvements.

### Summary

The main purpose of the blanching process of the described kind is to reduce the amount of sugar in the product, and a secondary purpose is be to optimize the sugar reduction while maintaining the texture and dry mass of the blanched product, and thus the taste. It is one object of the present invention to provide an apparatus which achieves these purposes more efficiently than prior-art apparatuses. The apparatus according to the below description eliminates or alleviates some or all of the drawbacks in the background art.

The present invention achieves the above purpose, and thus solves the inventive purpose, in two different yet combinable ways, by:
An apparatus for processing fruit or vegetables using water comprising
a trough where processing water may be contained,
a conveyor mechanism, comprising an endless conveyor guided over rollers, able to transport the fruit or vegetables through the processing water in a machine direction,
a water inlet through which fresh water may be added to the trough,
a water outlet through which processing water may be removed from the trough characterized in
that the individual recirculation zones are arranged in along the machine direction of the trough, wherein adjacent segments are separated by means of recirculation of water and each recirculation zone comprises a water inlet and a water outlet, wherein a water temperature of one of the segments differs from the water temperature of an adjacent segment, and in that the recirculation zones are arranged to provide a decreasing temperature in the machine direction, from an upstream end to a downstream end of the trough (4).

In the above and in the following the terms "downstream" and "upstream" relates to the machine direction, and not necessarily to a flow direction of the processing water.

Both characterizing features results in a reduction of sugar content on the surface of the product being processed. Control of the recirculation zones has the additional effect it further prevents extracted sugar to spread in the machine direction. In one or more embodiments each segment may comprise a water inlet and a water outlet between which water is recirculated. This will obstruct temperature equalization between adjacent segments even if there are no constructional partitions between the separate segments, and it also enables control of the water flow such that water exchange between segments may be reduced, resulting in that the concentration of residues from the product being processed is allowed to vary, preferably from a higher residue content to a lower residue content. In one or more embodiments the water inlets of each segment comprise nozzles distributed over the width of the trough, and outlets arranged in the same manner. Arranging the fresh water inlets in the downstream end of the apparatus provides a dual use of the fresh water; firstly it is used to lower the overall residue content in the processing water and secondly to reduce the sugar content on the surface of the product leaving the processing water.

According to one or several embodiments the water inlet of a recirculation zone comprises a set of inlets distributed along the entire width direction of trough, in an upstream end of the zone. One advantage of this arrangement is that it provides a good controllability of the water injection.

In one or more embodiments the temperature of each recirculation zone is controlled individually. This feature benefits from the arrangement of individual recirculation zones, since this will enable the possibility of having neighboring zones with different temperature levels. In one or more embodiments the temperature is arranged to be gradually reduced in a machine direction, starting with a higher temperature upstream and ending with a lower temperature downstream, and in yet another embodiment the temperature interval ranges from about 85°C to about 55°C.

In one or more embodiments each recirculation zone comprises a separate heater and a separate water pump. The heater may be a heater using direct-injected steam or comprise a hot oil heat exchanger system, though other conventional heater systems are possible.

Control of the temperature in the recirculation zones has the immediate effect that the sugar content may be reduced while the dry mass and the texture is maintained to a higher degree than what has been the case for a conventional apparatus according to background art. The setup allows for optimization in relation to the actual product being processed.

In one or more embodiments an inlet for (one or several) fresh water is arranged in a downstream end of the machine, and in one or more embodiment the water outlet is arranged in the upstream end of the machine. This will generate an overall flow direction which is reversed relative to the machine direction, which in turn results in that the content of residues gradually decreases in the machine direction. According to one or several embodiments the fresh water is arranged to rinse the product over the entire width of the conveyor as the product leaves the water bath. This further reduces the amount of sugar in and in particular *on* the product, with the advantageous effects already described. In one or more embodiments a water outlet, which may be the water outlet of the downstream recirculation zone has an extension such that it extends past the water level in the downstream end of the machine. This arrangement reduces the generation of waves in the trough, which otherwise would affect the distribution of product on the conveyor belt, which in turn would make the flushing and subsequent drying of the product less efficient.

Water injectors, injecting water jets into the trough may be arranged along the length the trough on the lateral sides thereof, and in one or several embodiments these may have a flow rate of about 0-10 m/s, and an orifice opening diameter of about, 5-20 mm, e.g. 8-14 mm. In one or more embodiments the diameter is 14 mm in the upstream end and 8 mm in the downstream end, and the velocity of the flows may be kept quite constant (resulting in decreasing flow rates in the downstream direction). The water jets generate turbulence in the bath, which in turn separates the slices from each other. The separation is beneficial when an exchange of water in contact with the surface of the product is desired. Generally, the upper limit of the flow velocity is set by the strength of the product (i.e. too high velocities will break the product).

### Brief Description of the Drawings

Fig. 1 is a perspective view of an inventive apparatus according to a first embodiment of the present invention.
Fig. 2 is a top view of the apparatus of Fig. 1
Fig. 3 is a sectional view of the apparatus of Fig. 2, along the line III-III.

### Description of Embodiments

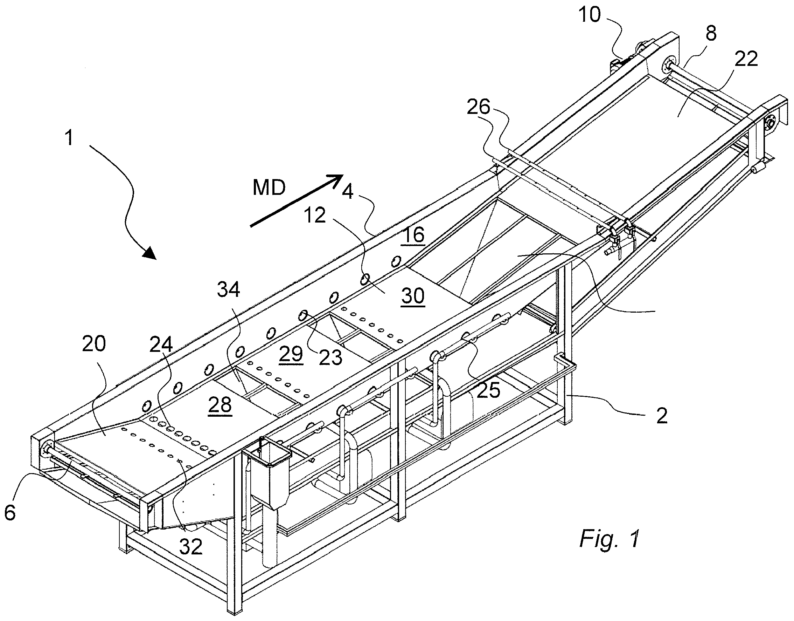

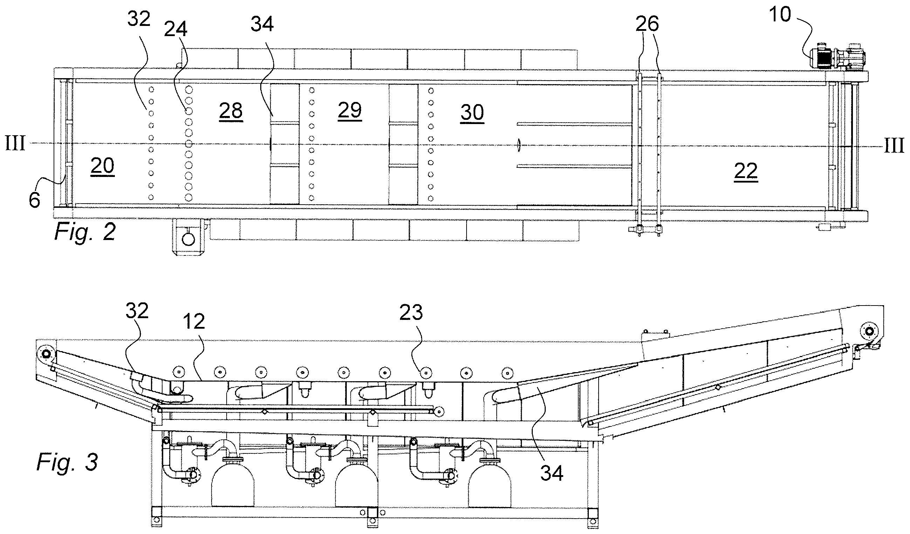

Fig. 1 is a perspective view of an apparatus 1 for blanching of potato slices according to a first embodiment of the present invention. The apparatus 1 is shown in perspective and with some components removed in order to increase clarity. Further views are shown in Figs. 2 and 3 in order to improve the disclosure of the present invention even further. A supporting frame 2 carries a trough 4, which may be filled with water for blanching of potato slices. An endless conveyor mechanism (not shown) is guided over rollers 6, 8, of which at least one is driven by a motor 10, to convey the potato slices through the water in the trough 4. The endless conveyor mechanism may be made of stainless steel or other durable material and its path is obvious to the skilled person. The actual conveyor belt of this embodiment has a mesh construction, such that it allows for a through flow of water. Additional conveyor means may also be arranged, as will be discussed. The endless conveyor mechanism is guided close to the bottom 12 of the trough 4 by guide means (not shown), in the form of plastic rails (e.g. of PTFE) arranged along the lateral walls 16, 18. Plastic rails may also be arranged along the bottom of the trough to prevent metal-to-metal contact, and along the lateral sides of the trough (particularly in the inlet and the outlet end) in order to prevent product from getting jammed between the belt and the lateral walls. The potato slices enter the water via an inlet ramp 20 and leave the water via an outlet ramp 22, carried by the conveyor mechanism. Nozzles 23 for transverse injection of water jets are arranged along the lateral walls of the trough, fed from pipes 25. The turbulence generated by such water injection will provide adequate mixing of the potato slices, providing improved heat transfer and prevent the chips from adhering to each other.

A fresh water inlet 26 is arranged in the region of the outlet ramp 22, by which the potato slices are rinsed with fresh water as they leave the blanching water in the trough. In this embodiment the fresh water inlet 26 is arranged in the form of two pipes 26 in the cross direction of the ramp 22, each pipe having holes distributed along its length. The water may be injected in a direction reverse to the machine direction, yet impacting onto the potato slices after they have left the water bath. It is assumed that if the water inlet 26 is arranged further from the water bath the rinsing effect will be improved. However, it is often the case that a blancher of the described type is followed by other processing apparatuses, which require the product to be dry. A late rinse with water will complicate the necessary drying process, which is why the rinsing is performed above the water level, yet close to the water bath. A water drain 24 or a water outlet for draining excess water is arranged at the opposing end of the trough 4, in the region of the inlet ramp 20. This will automatically generate an overall flow of water in the direction reverse to the machine direction.

In the present embodiment the trough 4 is divided into three segments 28, 29, 30 or recirculation zones, shown more clearly in Fig. 2. Each recirculation zone comprises a water inlet 32 and a water outlet 34 (shown schematically for zone 28 only). Water enters the trough via the inlet 32 (or inlets) and is driven towards the corresponding outlet 34. A pump (not shown) recirculates the water from the outlet 34 to the inlet 32, such that it is again injected to the trough 4. This recirculation of water will somewhat separate adjacent segments, such that e.g. the water temperature of one segment may be allowed to differ from the water temperature of an adjacent segment. For controllability purposes it is beneficial to use a separate pumping and heating system form each recirculation zone, which is the case in the present embodiment.

For all embodiments it is beneficial, though not required, that the water inlets 32 are distributed along the width of the trough at one end of each segment, and directs the injected water flow somewhat towards the outlets 34 of the same segment. It is evident from the drawings that outlet 34 of the segment 30 as a larger surface area then the other outlets 34. In particular the downstream end of this outlet extends beyond (above) the water surface of the trough 4. This will reduce the generation of waves in the water of the trough and thus provide a more even spread of product on the conveyor belt. If the downstream end of the outlet 34 would terminate below the water level, water would have to flow back from the ramp 22 and into the water before exiting via the outlet, which would then be a wave-generating mechanism.

In the specific embodiment the temperature of the first segment (upstream in relation to the machine direction) may be around 85°C, and the downstream segment a temperature of about 55 °C, wherein the middle segment has a temperature in the interval there between. The individual segments may e.g. be heated by direct-injected steam or a hot oil heat exchanger system, as has been mentioned before. It should be noted that embodiments of the present invention allows for an optimization of water temperatures in order to achieve a specific purpose. The actual temperatures set in the different segments may be optimized for the actual purpose, and should not be considered limiting for the present invention as defined by claims. For the purpose of blanching potato slices a decreasing temperature according to the above a temperature gradient ranging from about 85 °C to about 60 °C has proven to be well adapted to its purpose, although a lower temperature of about 55 °C may also be possible.

An additional conveyor mechanism (not shown, since it is known for the skilled person) may be arranged, in the form of an endless belt driven providing an upper endless conveyor belt arranged above the first described conveyor mechanism. The upper conveyor belt comprises flaps of mesh type, such as a metal net on a prame) extending at right angles from the belt and transverse relative to the to the machine direction. The flaps are distributed along the length of the upper conveyor belt. The flaps extend into the water of the trough 4 and define compartments together with the lateral walls of the trough and the lower conveyor mechanism. The potato slices may then be conveyed through the water bath, first on the lower conveyor into the bath. In the bath the slices will be fluidized by the water jets and essentially float freely in the water volume, and consequently they will be pushed along by the flaps in the above defined compartments, before leaving the water bath on the lower conveyor belt. The Both conveyor mechanisms may in any embodiment have an adjustable speed, and there may be a relative speed difference between the conveyor mechanisms. In one or more embodiments the lower conveyor mechanism moves at a higher speed than the upper in order to generate reduced height of the layer of potato slices on the lower conveyor belt as it leaves the water bath, such that flushing/rinsing and drying is simplified. The speed of the upper conveyor mechanism will thus set the blanching time.

The main contributors for the beneficial effects provided by the present invention are the inventive arrangement of the fresh water inlets, and the inventive arrangement of the recirculation zones. A desired effect is provided with only one of the two, and when combined the effect is even stronger. Note that all details showed in the embodiment are not necessary for achieving the inventive advantages.

It should also be noted that though the description of the present invention is concise the disclosure suffices for the skilled person wanting to apply the teachings of the present invention after studying the disclosure of the present application.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

In the claims, the term "comprises/comprising" does not exclude the presence of other elements or steps. Furthermore, although individually listed, a plurality of means, elements or method steps may be implemented by e.g. a single unit or processor. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. An apparatus (1) for processing fruit or vegetables using water comprising
a trough (4) where processing water may be contained,
a conveyor mechanism, comprising an endless conveyor guided over rollers, able to transport the fruit or vegetables through the processing water in a machine direction (MD),
a fresh water inlet (26) through which fresh water may be added to the trough,
a water drain (24) through which processing water may be removed from the trough
**characterized in**
**that** individual recirculation zones (28, 29, 30) are arranged in segments along the machine direction (MD) of the trough (4), wherein adjacent segments are separated by means of recirculation of water and each recirculation zone (28, 29, 30) comprises a water inlet (32) and a water outlet (34), wherein a water temperature of one of the segments differs from the water temperature of an adjacent segment, and in that the recirculation zones (28, 29, 30) are arranged to provide a decreasing temperature in the machine direction (MD), from an upstream end to a downstream end of the trough (4).

2. The apparatus of claim 1, wherein, for one or more recirculation zones, the water inlet (32) is arranged upstream the water outlet (34).

3. The apparatus of any preceding claim, wherein the water outlet (34) of the recirculation zone (30) closest to the downstream end of the trough (4) has a downstream boundary ranging above the water level.

4. The apparatus of any preceding claim, wherein fresh water inlets (26) are arranged in the downstream end of the apparatus (1), such that product conveyed on the conveyor mechanism may be rinsed with fresh water as it leaves the processing water.

5. The apparatus of claim 4, wherein the fresh water inlets comprise several openings (25) distributed over the width of the trough (4).

6. The apparatus of any preceding claim, wherein the temperature of each recirculation zone is controlled individually.

7. The apparatus of claim 6, wherein a separate recirculation pump and a separate heating system is associated to each recirculation zone.

8. The apparatus of any preceding claim, further comprising water injectors distributed in the length direction of the lateral walls of the trough.

9. The apparatus of claim 8, wherein an injection velocity is kept essentially constant for all injectors, while an effective injector diameter decreases in the machine direction (MD).

10. The apparatus of claim 9, wherein said velocity falls within the range of about 0-10 m/s and said diameter ranges from about 14 to about 8 mm.

11. The apparatus of any preceding claim, wherein the conveyor mechanism comprises,
mesh flaps extending into the bath from above, said flaps being arranged to push the product through the water bath of the trough by means of mesh flaps extending into the water bath from above, and
a lower conveyor belt transporting the product into and out of the water bath, wherein
the flaps preferably have a speed exceeding the speed of the conveyor mechanism.

12. The apparatus of any preceding claim, wherein the decreasing temperature ranges from about 85 °C in the upstream end, in a first segment (28) of the trough, and to about 55 °C in the downstream end, in a last segment (30) of the trough, and wherein an intermediate segment has a temperature there between.

13. A method for processing a product in the form of fruit and or vegetables, in particular for blanching of potato slices, comprising the steps of:
providing the product to the inlet end of a trough with a single water bath,
transporting the product through the water bath, further comprising the step of subjecting the product to separate recirculation zones arranged in segments, having different temperatures, wherein the temperature decreases from an upstream end of the trough to a downstream end of the trough, wherein adjacent segments are separated by means of recirculation of water and each recirculation zone (28, 29, 30) comprises a water inlet (32) and a water outlet (34), and wherein the water temperature of one of the segments differs from the water temperature of an adjacent segment.

## Patentansprüche

1. Vorrichtung (1) zum Verarbeiten von Obst oder Gemüse mittels Wasser, mit
einer Wanne (4), in der Prozesswasser zurückgehalten werden kann,
einer Transporteinrichtung, die ein endloses, über Walzen geführtes Förderband aufweist und dazu in der Lage ist, das Obst oder Gemüse in einer Maschinenrichtung (MD) durch das Prozesswasser zu transportieren,
einem Frischwassereinlass (26), durch den Frischwasser in die Wanne zugegeben werden kann,
einem Wasserabfluss (24), durch den Prozesswasser aus der Wanne entfernt werden kann,
**dadurch gekennzeichnet, dass**
einzelne Rezirkulationszonen (28, 29, 30) segmentweise längs der Maschinenrichtung (MD) der Wanne (4) angeordnet sind, wobei benachbarte Segmente durch eine Rezirkulation von Wasser getrennt sind und jede Rezirkulationszone (28, 29, 30) einen Wassereinlass (32) und einen Wasserauslass (34) aufweist, wobei eine Wassertemperatur eines der Segmente sich von der Wassertemperatur eines benachbarten Segments unterscheidet, und dass die Rezirkulationszonen (28, 29, 30) dazu angeordnet sind, in der Maschinenrichtung (MD) von einem stromaufwärtigen Ende zu einem stromabwärtigen Ende der Wanne (4) eine abnehmende Temperatur bereitzustellen.

2. Vorrichtung nach Anspruch 1, bei der für eine oder mehrere Rezirkulationszonen der Wassereinlass (32) stromaufwärts des Wasserauslasses (34) angeordnet ist.

3. Vorrichtung nach einem der vorhergehenden Ansprüche, bei dem der Wasserauslass (34) der dem stromabwärtigen Ende der Wanne (4) nächsten Rezirkulationszone (30) eine sich über das Wasserniveau erstreckende stromabwärtige Begrenzung hat.

4. Vorrichtung nach einem der vorhergehenden Ansprüche, bei der Frischwassereinlässe (26) am stromabwärtigen Ende der Vorrichtung (1) solchermaßen angeordnet sind, dass auf der Transporteinrichtung gefördertes Produkt beim Verlassen des Prozesswassers mit Frischwasser gespült werden kann.

5. Vorrichtung nach Anspruch 4, bei der die Frischwassereinlässe verschiedene über die Breite der Wanne (4) verteilte Öffnungen (25) umfassen.

6. Vorrichtung nach einem der vorhergehenden Ansprüche, bei der die Temperatur jeder Rezirkulationszone einzeln gesteuert ist.

7. Vorrichtung nach Anspruch 6, bei der jeder Rezirkulationszone eine separate Rezirkulationspumpe und ein separates Beheizungssystem zugehörig ist.

8. Vorrichtung nach einem der vorhergehenden Ansprüche, ferner umfassend Wassereinspritzdüsen, die in der Längsrichtung der Seitenwände der Wanne verteilt sind.

9. Vorrichtung nach Anspruch 8, bei der eine Einspritzgeschwindigkeit für alle Düsen im Wesentlichen konstant gehalten wird, während ein wirksamer Düsendurchmesser in der Maschinenrichtung (MD) abnimmt.

10. Vorrichtung nach Anspruch 9, bei der die Geschwindigkeit im Bereich von ungefähr 0 bis 10 m/s liegt und der Durchmesser von ungefähr 14 bis ungefähr 8 mm reicht.

11. Vorrichtung nach einem der vorhergehenden Ansprüche, bei der die Transporteinrichtung aufweist
von oben in das Bad reichende Netzklappen, wobei die Klappen dazu angeordnet sind, das Produkt durch das Wasserbad der Wanne mittels von oben in das Wasserbad reichender Netzklappen zu drücken, und
ein unteres Förderband, welches das Produkt in das und aus dem Wasserbad transportiert, wobei
die Klappen vorzugsweise eine die Geschwindigkeit der Transporteinrichtung übersteigende Geschwindigkeit haben.

12. Vorrichtung nach einem der vorhergehenden Ansprüche, bei der die abnehmende Temperatur von ungefähr 85°C, in einem ersten Segment (28) der Wanne, am stromaufwärtigen Ende bis zu ungefähr 55°C, in einem letzten Segment (30) der Wanne, am stromabwärtigen Ende reicht, und bei der ein dazwischen befindliches Segment eine dazwischen liegende Temperatur hat.

13. Verfahren zum Verarbeiten eines Produkts in Form von Obst und/oder Gemüse, insbesondere zum Bleichen von Kartoffelscheiben, umfassend die Schritte:
Liefern des Produkts zu dem Einlassende einer Wanne mit einem einzigen Wasserbad,
Transportieren des Produkts durch das Wasserbad, ferner umfassend den Schritt des Aussetzens des Produkts getrennten, segmentweise angeordneten Rezirkulationszonen mit unterschiedlichen Temperaturen, wobei die Temperatur von einem stromaufwärtigen Ende der Wanne zu einem stromabwärtigen Ende der Wanne abnimmt, wobei benachbarte Segmente durch Rezirkulation von Wasser getrennt sind und jede Rezirkulationszone (28, 29, 30) einen Wassereinlass (32) und einen Wasserauslass (34) aufweist, und wobei die Wassertemperatur eines der Segmente sich von der Wassertemperatur eines benachbarten Segments unterscheidet.

## Revendications

1. Appareil (1) pour le traitement de fruits ou de légumes en utilisant de l'eau comprenant
une auge (4) où l'eau de traitement peut être contenue,
un mécanisme de transport, comprenant un transporteur continu guidé sur des rouleaux, capable de transporter les fruits ou légumes à travers l'eau de traitement dans une direction de machine (MD),
un orifice d'entrée d'eau douce (26) à travers lequel l'eau douce peut être ajoutée à l'auge,
un orifice d'évacuation d'eau (24) à travers lequel l'eau de traitement peut être retirée de l'auge
**caractérisé en ce que**
les zones de recirculation individuelles (28, 29, 30) sont agencées en segments le long de la direction de machine (MD) de l'auge (4), où des segments adjacents sont séparés au moyen de la recirculation d'eau et chaque zone de recirculation (28, 29, 30) comprend un orifice d'entrée d'eau (32) et un orifice de sortie d'eau (34), où une température d'eau de l'un des segments est différente de la température d'eau d'un segment adjacent, et **en ce que** les zones de recirculation (28, 29, 30) sont agencées pour fournir une température décroissante dans la direction de machine (MD), à partir d'une extrémité amont vers une extrémité aval de l'auge (4).

2. Appareil de la revendication 1, dans lequel, pour une ou plusieurs zone(s) de recirculation, l'orifice d'entrée d'eau (32) est agencé en amont de l'orifice de sortie d'eau (34).

3. Appareil de l'une des revendications précédentes, dans lequel l'orifice de sortie d'eau (34) de la zone de recirculation (30) la plus proche de l'extrémité aval de l'auge (4) présente une limite aval se trouvant au-dessus du niveau d'eau.

4. Appareil de l'une des revendications précédentes, dans lequel les orifices d'entrée d'eau douce (26) sont agencés dans l'extrémité aval de l'appareil (1), de sorte que le produit transporté sur le mécanisme de transport puisse être rincé avec de l'eau douce à mesure qu'il sort de l'eau de traitement.

5. Appareil de la revendication 4, dans lequel les orifices d'entrée d'eau douce comprennent plusieurs ouvertures (25) réparties sur la largeur de l'auge (4).

6. Appareil de l'une des revendications précédentes, dans lequel la température de chaque zone de recirculation est régulée de manière individuelle.

7. Appareil de la revendication 6, dans lequel une pompe de recirculation séparée et un système de chauffage séparé sont associés à chaque zone de recirculation.

8. Appareil de l'une des revendications précédentes, comprenant en outre des injecteurs d'eau répartis dans la direction de la longueur des parois latérales de l'auge.

9. Appareil de la revendication 8, dans lequel une vitesse d'injection est maintenue sensiblement constante pour tous les injecteurs, pendant que le diamètre effectif d'injecteur diminue dans la direction de machine (MD).

10. Appareil de la revendication 9, dans lequel ladite vitesse se situe dans la plage allant d'environ 0 à 10 m/s et ledit diamètre se trouve dans la plage allant d'environ 14 à environ 8 mm.

11. Appareil de l'une des revendications précédentes, dans lequel le mécanisme de transport comprend,
des rabats en mailles s'étendant dans le bain depuis le dessus, lesdits rabats étant agencés pour pousser le produit à travers le bain d'eau de l'auge au moyen de rabats en maille s'étendant dans le bain d'eau depuis le dessus, et
une courroie de transporteur inférieure transportant le produit dans et en dehors du bain d'eau, où
les rabats ont de préférence une vitesse dépassant la vitesse du mécanisme de transport.

12. Appareil de l'une des revendications précédentes, dans lequel la température décroissante varie entre environ 85°C dans l'extrémité amont, dans un premier segment (28) de l'auge, et environ 55°C dans l'extrémité aval, dans un dernier segment (30) de l'auge, et dans lequel un segment intermédiaire présente une température entre celles-ci.

13. Procédé de traitement d'un produit sous forme de fruits et/ou de légumes, en particulier pour blanchir des tranches de pommes de terre, comprenant les étapes consistant :
à fournir le produit à l'extrémité d'entrée d'une auge dotée d'un bain d'eau unique,
à transporter le produit à travers le bain d'eau, comprenant en outre l'étape consistant à soumettre le produit à des zones de recirculation séparées agencées en segments, ayant des températures différentes, où la température diminue d'une extrémité amont de l'auge à une extrémité aval de l'auge, où les segments adjacents sont séparés au moyen de la recirculation d'eau et chaque zone de recirculation (28, 29, 30) comprend un orifice d'entrée d'eau (32) et un orifice de sortie d'eau (34), et où la température d'eau de l'un des segments est différente de la température d'eau d'un segment adjacent.
